Europäisches Patentamt

European Patent Office

Office européen des brevets

(19)

(11) **EP 1 670 244 A2**

(12) **EUROPEAN PATENT APPLICATION**

(43) Date of publication:
**14.06.2006 Bulletin 2006/24**

(51) Int Cl.:
***H04N 5/783*** (2006.01)

(21) Application number: **05024657.8**

(22) Date of filing: **11.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.12.2004 KR 2004103140**

(71) Applicant: **LG Electronics Inc.
Yongdungpo-gu
Seoul (KR)**

(72) Inventor: **Lee, Eun-Sang
Bucheon,
Gyeonggi-Do (KR)**

(74) Representative: **Katérle, Axel et al
Wuesthoff & Wuesthoff
Patent- und Rechtsanwälte
Schweigerstraße 2
81541 München (DE)**

(54) **Video trick play method for a mobile communications terminal**

(57)    An apparatus and method for detecting video of a mobile communications terminal, wherein the apparatus for detecting the video of the mobile communications terminal comprises a scene change frame detector to detect a preset number of scene change frames based on inputted video streaming data and output the detected scene change frames, and a display unit to display the outputted scene change frames according to a user's request for video searching.

**EP 1 670 244 A2**

**Description**

**BACKGROUND OF THE INVENTION**

1. Field of the Invention

The present invention relates to a mobile communications terminal, and particularly, to an apparatus and method for searching through videos of a mobile communications terminal to allow efficient video image searching.

2. Background of the Related Art

In general, a mobile communications terminal is a communications device allowing a user to place wireless calls to another party and providing a wireless connection anytime and anywhere through a switching control of a MSC (Mobile Switching Center) while moving in a service region managed by a BS (Base Station), such that data communications using symbols, numbers, characters, or the like, and multimedia communications including images and videos, as well as voice communications can be performed.

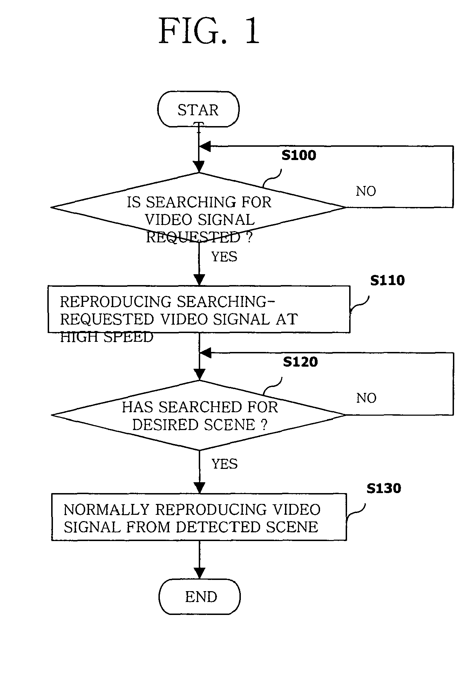

The mobile communications terminal is provided with various additional services which are commonly used in everyday life in addition to typical communication functions to thus provide the user with more convenience and applications of communications. Among such services, a camera function for capturing videos (moving pictures) and images is recently gaining popularity. Hereafter, a method for searching through videos recordings, clips or images (simply referred to as "searching videos" hereafter) of a mobile communications terminal according to the related art supporting the camera function will be explained with reference to Fig. 1.

Fig. 1 is a flowchart showing an exemplary method for searching videos of a mobile communications terminal according to the related art.

As shown in the drawing, a method for searching videos of a mobile communications terminal according to the related art includes: confirming whether a search for a stored video signal is requested (S100); when the search for the stored video signal is requested, reproducing the searching-requested video signal at high speed (S110); searching a desired scene from the video signal reproduced at the high speed (S120); and normally reproducing the video signal from the searched scene (S130).

Such method for searching the video of the mobile communications terminal according to the related art will now be explained in more detail.

First, the mobile communications terminal confirms whether the user requests a search for a stored video signal (S100). When the searching for the video signal is requested, the mobile communications terminal sequentially reproduces the video signal on its display device (screen) at high speed from the beginning or starting point of the video recording (S110). That is, the mobile communications terminal can reproduce (play back) the stored video signal at a pre-set speed that is greater than a normal reproducing speed to allow the user to quickly view its contents. Namely, a function similar to the "fast forward" or "preview" function in typical video play back devices is performed.

Thereafter, the user searches for and selects his desired scene from the video signal being reproduced (S120), and thus the mobile communications terminal can be used to normally reproduce (at the normal reproducing speed) the video signal beginning from the searched scene (S130). This selection of the desired scene may involve the user's manipulation of various control functions (keys or buttons) to stop the high speed play back after the user recognizes a start point of a scene he wishes to view, to rewind the video to a position prior to the start point of the desired scene, and then resuming normal play back at that point to allow reproduction of the desired scene.

However, in the method for searching videos of the mobile communications terminal according to the related art, the video signal needs to be sequentially reproduced at high speed from the video recording beginning or starting point thereof in order to perform video searching, and accordingly it may take a long time for the user to search through the video to look for his desired scene. This results in increased battery consumption for the mobile communications terminal and the video searching procedure is not efficient.

**BRIEF DESCRIPTION OF THE INVENTION**

Therefore, an object of the present invention is to provide an apparatus and method for searching video of a mobile communications terminal capable of efficiently searching videos by detecting a pre-set number of scene change frames with respect to a video signal and adding the detected scene change frames to a preset region of the video signal.

To achieve these and other advantages and in accordance with the purpose of the present invention, as embodied and broadly described herein, there is provided an apparatus for searching videos of a mobile communications terminal that can include a scene change frame detector to detect a pre-set number of scene change frames based on inputted video streaming data, and to output the detected scene change frames, and a display unit to display the outputted scene change frames according to a user's request for video searching.

To achieve these and other advantages and in accordance with the purpose of the present invention, as embodied and broadly described herein, there is provided a method for searching videos of a mobile communications terminal that can comprise detecting a pre-set number of scene change frames based on inputted video streaming data to thus output the detected scene change frames, and displaying the outputted scene change frames according to a user's request for video searching.

To achieve these and other advantages and in accordance with the purpose of the present invention, as embodied and broadly described herein, there is provided a mobile communication terminal that can include a video recorder associated with the mobile communication terminal to capture video recordings; a memory to store the video recordings; a display device to display the video recordings stored in the memory; and a processor cooperating with the video recorder, the memory, and the display device to perform the steps of, processing the stored video recordings according to their frames by comparing at least a certain number of pixels of a current frame with those of a reference frame to determine whether the current frame should be used as a scene change frame that can be viewed later by a user when searching for a desired scene, inserting scene change frame information related to one or more scene change frames into appropriate portions of the video recordings stored in the memory, and displaying the scene change frames upon user request to facilitate searching of scenes in the video recordings.

To achieve these and other advantages and in accordance with the purpose of the present invention, as embodied and broadly described herein, there is provided a mobile communication terminal that can include a transceiver to receive signals including video recordings; a memory to store the received video recordings; a display device to display the video recordings stored in the memory; and a processor cooperating with the transceiver, the memory, and the display device to perform the steps of, determining a total number of scene change frames in the video recordings based upon scene change frame information related to one or more scene change frames that was inserted into appropriate portions of the video recordings, adding supplementary scene change frames or removing excess scene change frames until the determined total number of scene change frames match a reference value, and displaying the scene change frames upon user request to facilitate searching of scenes in the video recordings.

The foregoing and other objects, features, aspects and advantages of the present invention will become more apparent from the following detailed description of the present invention when taken in conjunction with the accompanying drawings.

## BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Fig. 1 is a flowchart showing an exemplary method for searching video of a mobile communications terminal according to the related art;
Fig. 2 is a block diagram showing an exemplary apparatus for searching video of a mobile communications terminal according to the present invention;
Fig. 3 is a block diagram showing a detailed construction of an exemplary scene change frame detector of Fig. 2;
Fig. 4 is a flowchart showing an exemplary method for searching video of a mobile communications terminal according to the present invention;
Fig. 5 is a flowchart showing an exemplary method for detecting a candidate motion frame of Fig. 4.
Fig. 6 is a flowchart showing an exemplary method for detecting a scene change preliminary candidate frame of Fig. 4;
Fig. 7 is a flowchart showing an exemplary method for detecting a scene change candidate frame of Fig. 4;
Fig. 8 is a flowchart showing an exemplary method for detecting a scene change frame of Fig. 4; and
Figs. 9A and 9B are views showing exemplary principles for adjusting the number of scene change candidate frames according to the present invention.

## DETAILED DESCRIPTION OF THE INVENTION

Reference will now be made in detail to some embodiments of the present invention, examples of which are illustrated in the accompanying drawings. Various components and procedures that would be known or understood to those skilled in the art will not be described in detail herein to prevent the features of the invention from being obscured.

Hereinafter, with reference to the accompanying drawings, an explanation will be made for an apparatus and method for searching videos of a mobile communications terminal according to the present invention, in which a pre-set number of scene change frames with respect to a video signal is detected and the detected scene change frames are added to a pre-set region of the video signal, thereby allowing efficient searching of scenes in the video recording. Hereafter, the phrase "searching videos" will refer to the operation that allows the user to look through portions of or the entirety of a video recording stored in a memory of the mobile communication terminal, similar to a so-called "fast-forward" function of a typical video recorder or video player.

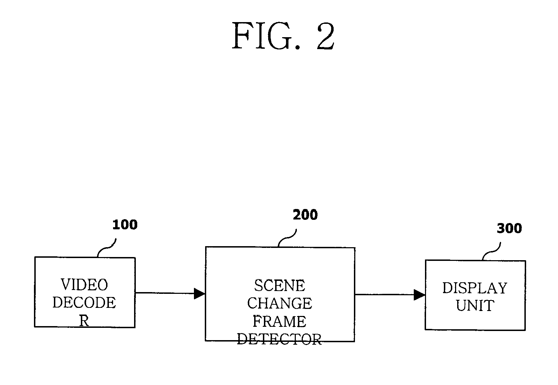

Fig. 2 is a view showing an exemplary construction of an apparatus for searching videos of a mobile communications terminal according to the present invention.

As shown in the drawing, an apparatus for searching videos of a mobile communications terminal according to the present invention may include: a video decoder 100 to decode an inputted video signal and thus output the decoded video signal to video streaming data; a scene change frame detector 200 to detect a scene change frame based on the outputted video streaming data; and a display unit 300 to display the detected scene change frame according to a user's request for video searching.

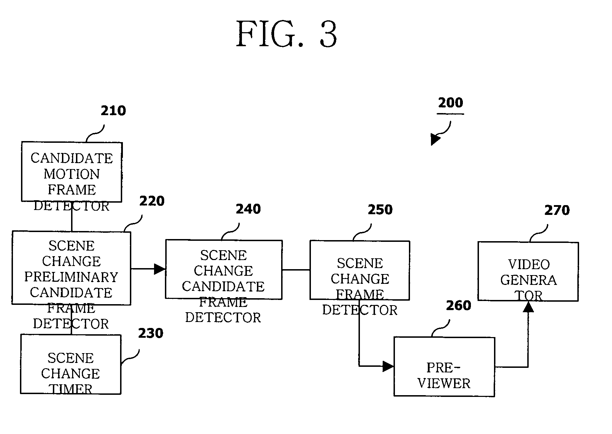

The apparatus for searching videos of the mobile communications terminal detects a pre-set number of scene change frames of the inputted video signal by the scene change frame detector 200. A detailed construction of such scene change detector will now be explained with reference to Fig. 3.

Fig. 3 is a block diagram showing a detailed construction of a scene change frame detector of Fig. 2.

As shown in Fig. 3, a scene change frame detector according to the present invention may include: a candidate motion frame detector 210 to detect a candidate motion frame based on the inputted video streaming data; a scene change preliminary candidate frame detector 220 to detect a scene change preliminary candidate frame based on the detected candidate motion frame; a scene change timer 230 to record a generation time of the scene change preliminary candidate frame in the detected scene change preliminary candidate frame; a scene change candidate frame detector 240 to detect a scene change candidate frame based on the recorded generation time; a scene change frame determiner 250 to determine a scene change frame based on the detected scene change candidate frame; a pre-viewer block 260 to convert the determined scene change frame into a format for a pre-viewing; and video generator 270 to add the converted scene change frame to a preset region of the inputted video signal.

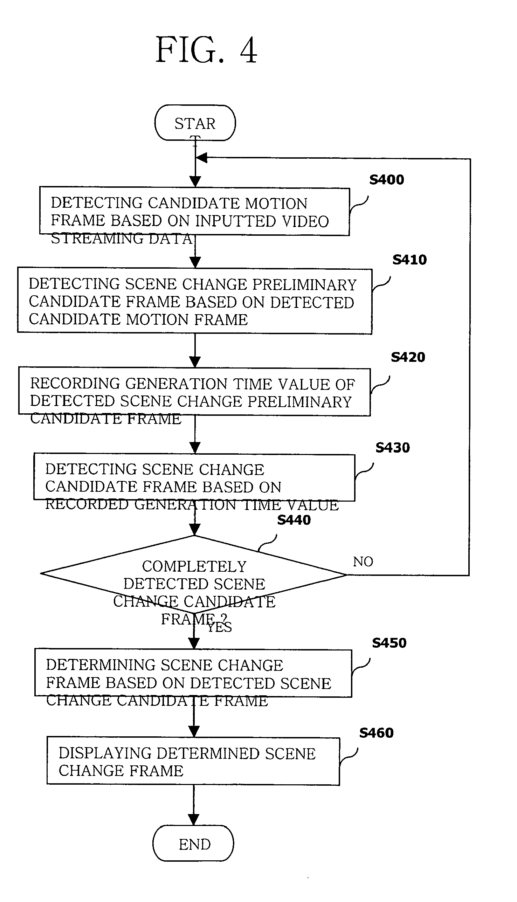

A method for searching videos of a mobile communications terminal provided with an exemplary apparatus for searching videos according to the present invention will now be explained with reference to Fig. 4.

Fig. 4 is a flowchart showing an exemplary method for searching video of a mobile communications terminal according to the present invention.

As shown in Fig. 4, a method for searching videos of a mobile communications terminal according to the present invention can comprise: detecting a candidate motion frame based on inputted video streaming data (S400); detecting a scene change preliminary candidate frame based on the detected candidate motion frame (S410); recording a generation time of the scene change preliminary candidate frame in the detected scene change preliminary candidate frame (S420); detecting a scene change candidate frame based on the recorded generation time (S430); confirming whether the scene change candidate frame for the inputted video streaming data is successfully detected (S440); when the scene change candidate frame is completely detected, determining a scene change frame based on the detected scene change candidate frame (S450); and displaying the determined scene change frame according to a user's request for video searching (S460).

Such method for searching the video of the mobile communications terminal will now be explained in more detail.

First of all, the inputted video streaming data is processed according to each frame unit. The scene change frame detector 200 sets a frame selected per each pre-set number of frames as a reference frame. Here, the pre-set number of frames can be set to 15 frames, but this number may be changed accordingly.

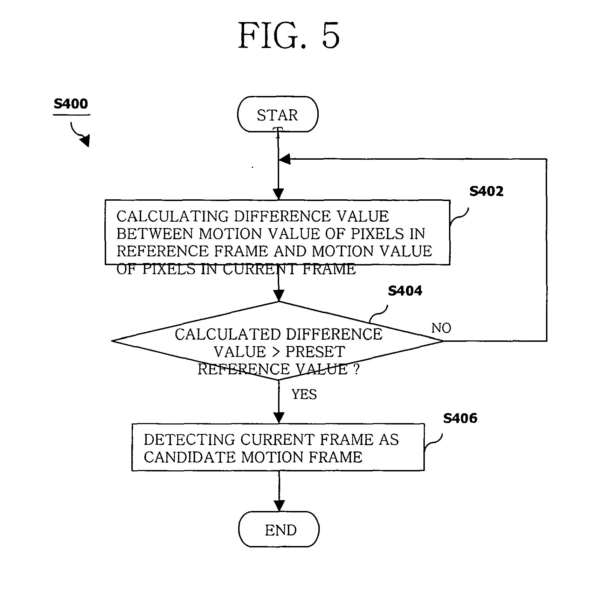

First, the candidate motion frame detector 210 detects a candidate motion frame based on the inputted video streaming data (S400). The method for detecting the candidate motion frame will now be explained with reference to Fig. 5.

Fig. 5 is a flowchart showing a detailed method for detecting a candidate motion frame of Fig. 4.

As shown therein, the method for detecting the candidate motion frame according to the present invention can include: calculating a difference value between motion values of pixels in the reference frame and motion values of pixels in a current frame (S402); comparing the calculated difference value with a preset reference value (S404); and when the calculated difference value is greater than the pre-set reference value, determining the current frame as the candidate motion frame (S406).

Such method for detecting the candidate motion frame according to the present invention will now be explained in more detail.

The candidate motion frame detector 210 compares the motion values of pixels in the reference frame and the motion values of pixels in the current frame to calculate a difference value $V_{diff\_sum}$ therebetween according to the comparison. Formula 1 can be used to obtain the difference values of pixels calculated according to a pixel unit corresponding to a preset number of pixels other than all the pixels (S402). Here, the pre-set number of pixels which is a unit to calculate the difference values may preferably be four pixels.

$$V_{diff\_sum} = \sum_{i=0, j=0}^{i+4, J+4} \left| V_{curr}(i, j) - V_{ref}(i, j) \right| \quad \text{-------------------(Formula 1)}$$

Here, $V_{curr}(i,j)$ denotes motion values of $(i,j)^{th}$ pixels in the current frame, and $V_{ref}(i,j)$ denotes motion values of $(i,j)^{th}$ pixels in the reference frame.

The candidate motion frame detector 210 then compares the calculated difference value with the preset reference value (S404). That is, when the difference value is greater than the pre-set reference value, the candidate motion frame detector 210 considers that the current frame contains more changes in image motions when compared to those of the reference frame, and accordingly determines the current frame to be a candidate motion frame (S406).

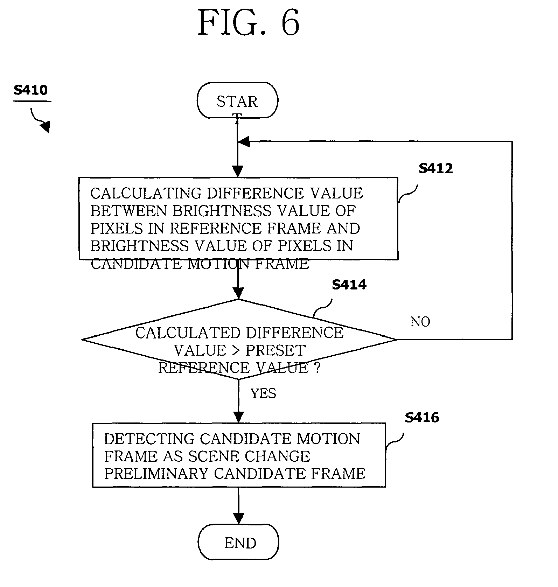

Second, the scene change preliminary candidate frame detector 220 detects a scene change preliminary candidate frame based on the determined candidate motion frame (S410). The method for detecting the scene change preliminary candidate frame will now be explained with reference to Fig. 6.

Fig. 6 is a flowchart showing a detailed method for detecting a scene change preliminary candidate frame of Fig. 4.

As shown in Fig. 6, the method for detecting the scene change preliminary candidate frame according to the present invention may comprise: calculating each difference value between brightness values of pixels in the reference frame and brightness values of pixels in the determined candidate motion frame (S412); comparing each calculated difference value with a preset reference value (S414); and when the calculated difference value is greater than the preset reference value, determining the candidate motion frame as the scene change preliminary candidate frame (S416).

Such method for detecting the scene change preliminary candidate frame according to the present invention will now be explained in detail.

The scene change preliminary candidate frame detector 220 compares the brightness value of the pixels in the determined candidate motion frame with that of the pixels in the reference frame, and calculates the difference value $B_{diff\_sum}$ therebetween according to the comparison. Here, Formula 2 can be used to obtain the difference values of the pixels calculated according to a unit corresponding to a pre-set number of pixels instead of all the pixels of the frame (S412).

$$B_{diff\_sum} = \frac{\sum\limits_{i=0, j=0}^{i+4, j+4} V_{curr}(i, j)}{(h\_size * v\_size)/4} - \frac{\sum\limits_{i=0, j=0}^{i+4, j+4} V_{ref}(i, j)}{(h\_size * v\_size)/4} \quad \text{--------- (Formula 2)}$$

Here, $V_{curr}(i,j)$ denotes motion values of $(i,j)^{th}$ pixels in the current frame, $V_{ref}(i,j)$ denotes motion values of $(i,j)^{th}$ pixels in the reference frame, $h\_size$ denotes the number of pixels in a horizontal direction of the current frame, and $v\_size$ denotes the number of pixels in a vertical direction of the current frame.

The scene change preliminary candidate frame detector 220 then compares the calculated difference value with a pre-set reference value (S414). That is, when the difference value is greater than the pre-set reference value, the scene change preliminary candidate frame detector 220 considers that the current frame contains more changes in image motions when compared to those of the reference frame, and accordingly determines the candidate motion frame to be a scene change preliminary candidate frame (S416).

The scene change timer 230 can add a time flag field to the determined scene change preliminary candidate frame. That is, the scene change timer 230 records a generation time of the scene change preliminary candidate frame in the added time flag field, and outputs the scene change preliminary candidate frame in which the generation time is recorded (S420).

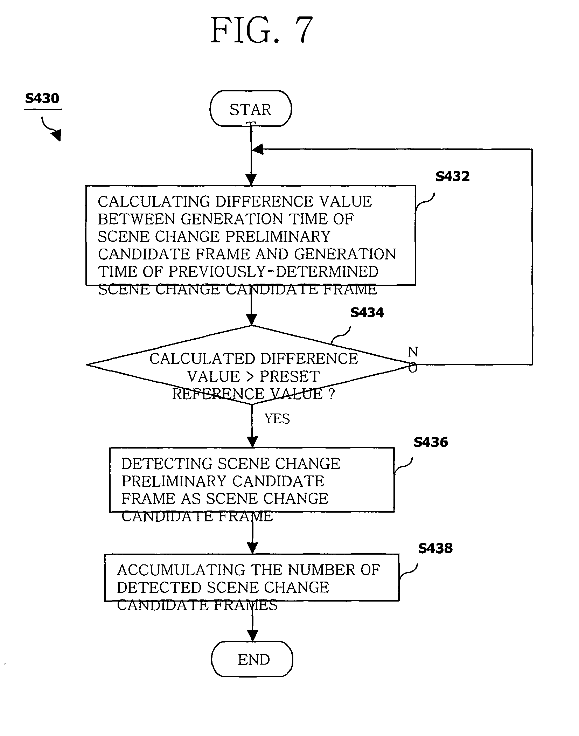

Third, the scene change candidate frame determiner 240 detects a scene change candidate frame based on the determined scene change preliminary candidate frame (S430). The method for detecting the scene change candidate frame will now be explained with reference to Fig. 7.

Fig. 7 is a flowchart showing a detailed method for detecting a scene change candidate frame of Fig. 4.

As shown in the drawing, the method for detecting the scene change candidate frame according to the present invention may comprise: calculating a difference value between a generation time of the determined scene change preliminary candidate frame and a generation time of a previously-determined scene change candidate frame (S432); comparing the calculated difference value with a pre-set reference value (S434); when the calculated difference value is greater than the pre-set reference value, determining the scene change preliminary candidate frame as a scene change candidate frame (S436); and accumulating the number of the determined scene change candidate frames (S438).

Such method for detecting the scene change candidate frame according to the present invention will now be explained in detail.

The scene change candidate frame determiner 240 compares a generation time recorded in the outputted scene change preliminary candidate frame with a generation time of a previously-determined scene change candidate frame, to thus calculate a difference value therebetween according to the comparison (S432). However, when there is no previously-determined scene change candidate frame, the scene change candidate frame determiner 240 can determine the outputted scene change preliminary candidate frame as a scene change candidate frame.

Then, the scene change candidate frame determiner 240 compares the calculated difference value with a pre-set reference value (S434). That is, the scene change candidate frame determiner 240 determines the scene change preliminary candidate frame as the scene change candidate frame when the difference value is greater than the pre-set reference value (S436).

Thereafter, the scene change candidate frame determiner 240 accumulates the number of the determined scene change candidate frames (S438), and then confirms whether the scene change candidate frames for all the inputted video streaming date are completely detected (S440).

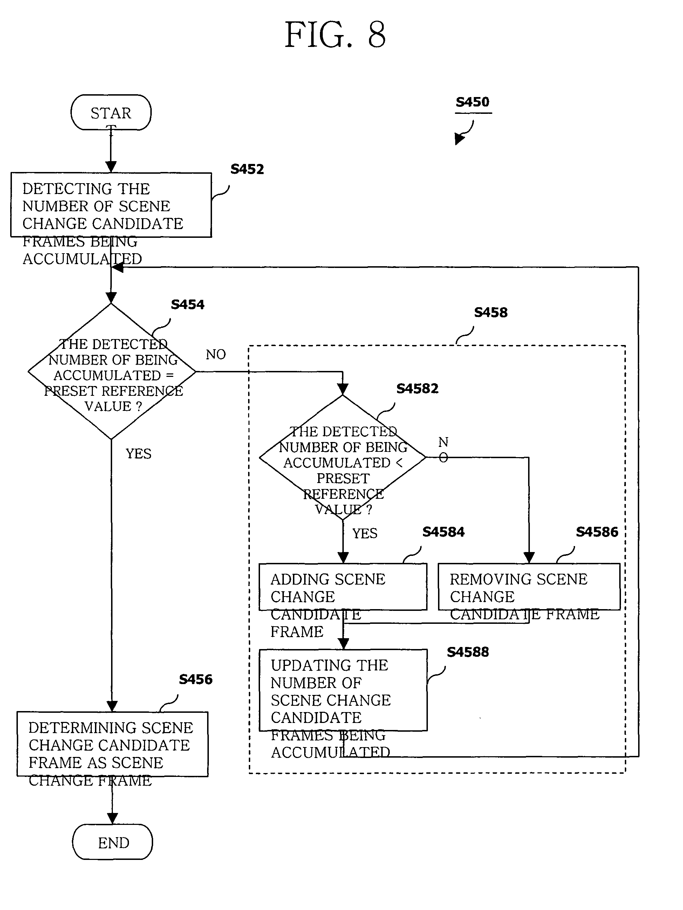

Fourth, the scene change frame determiner 250 detects a scene change frame based on the determined scene change candidate frame when completely detecting the scene change candidate frame (S450). The method for detecting the scene change frame will now be explained with reference to Fig. 8

Fig. 8 is a flowchart showing a detailed method for detecting a scene change frame of Fig. 4.

As shown in Fig. 8, the method for detecting a scene change frame according to the present invention may comprise: detecting the number of the determined scene change candidate frames being accumulated (S452); comparing the number of the detected scene change candidate frames being accumulated with a pre-set reference value (S454); and when the number of the scene change candidate frames being accumulated is identical to the pre-set reference value, determining the scene change candidate frame s a scene change frame (S456). Here, when the number of the scene change candidate frames being accumulated is not identical to the pre-set reference value, the method for detecting a scene change frame according to the present invention further comprises adjusting the number of scene change candidate frames as many as the difference value (S458).

Such method for detecting a scene change frame according to the present invention will now be explained in detail.

The scene change frame determiner 250 detects the number of the determined scene change candidate frames being accumulated (S452), and thereafter compares the number of the determined scene change candidate frames being accumulated with a pre-set reference value (S454). That is, the scene change frame determiner 250 determines the scene change candidate frame as the scene change frame when the number of the scene change candidate frames being accumulated is identical to the pre-set reference value.

On the other hand, the scene change frame determiner 250 adjusts the number of scene change candidate frames when the number of the scene change candidate frames being accumulated is not identical to the preset reference value (S458). That is, the scene change frame determiner 250 confirms whether or not the number of scene change candidate frames being accumulated is smaller than the pre-set reference value (S4582). When the number of scene change candidate frames being accumulated is smaller than the pre-set reference value, the scene change frame determiner 240 adds an appropriate number of scene change candidate frames, whereby the number equals the difference value (S4584), while removing an appropriate number of scene change candidate frames, whereby the number equals the difference value, when the number of scene change candidate frames being accumulated is greater than the pre-set reference value (S4586).

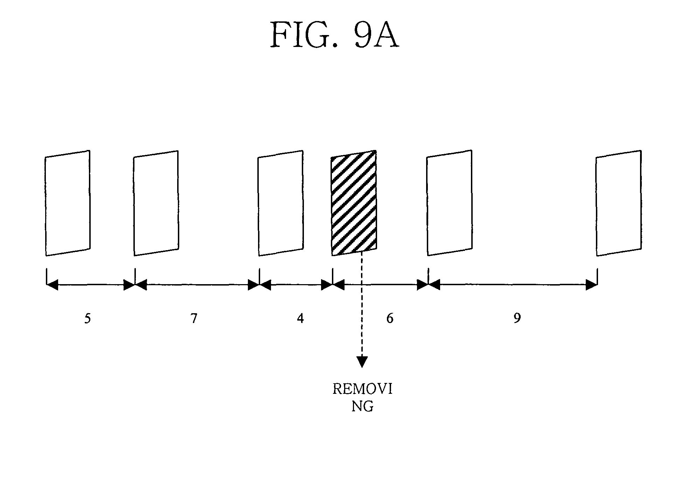

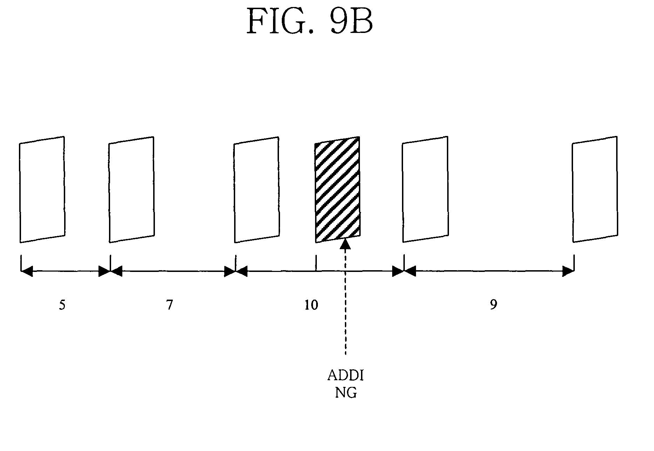

Afterwards, the scene change frame determiner 250 updates the number of scene change candidate frames being accumulated depending on the added or removed scene change candidate frames, so as to allow the number of scene change candidate frames being accumulated to be identical to the pre-set reference value. Such method for adding or removing the scene change candidate frame according to the present invention will now be explained with reference to Figs. 9A and 9B.

Figs. 9A and 9B are views showing an operational principle for adjusting the number of scene change candidate frames according to the present invention.

As shown in Fig. 9A, an operational principle can be seen such that the scene change frame determiner 250 removes the scene change candidate frames by as many as, for example, a difference value of '1' when the number of scene change candidate frames being accumulated is greater than the pre-set reference value. That is, the scene change frame determiner 250 calculates the difference value between each generation time of the scene change candidate frames and compares sizes of the calculated difference values, so as to enable removing of the scene change candidate frame having the smallest difference value.

As shown in Fig. 9B, an operational principle can be seen such that the scene change frame determiner 250 according to the present invention adds the scene change candidate frames as many as, for example, a difference value of '1' when the number of scene change candidate frames being accumulated is smaller than the pre-set reference value. That is, the scene change frame determiner 250 calculates the difference value between each generation time of the scene change candidate frames and compares sizes of the calculated difference values, so as to enable adding of a new scene change candidate frame between scene change candidate frames having the greatest difference value.

At this time, the added scene change candidate frame may preferably be determined as a frame positioned in the middle of the scene change candidate frames having the greatest difference value.

Further, when the number of scene change candidate frames being accumulated is identical to the pre-set reference value, the scene change frame determiner 250 determines the scene change candidate frame as the scene change frame and outputs the determined scene change frame.

The pre-viewer 260 converts the outputted scene change frame into a format to allow pre-viewing on the display screen and outputs the converted scene change frame. The video generator 270 adds the converted scene change frame to a pre-set region of the inputted video signal. As a result, the mobile communications terminal can display the scene change frame on the display unit 300 according to the user's request for the video searching (S450).

As described earlier, in the apparatus and method for searching the video of the mobile communications terminal according to the present invention, the pre-set number of scene change frames with respect to the video signal is detected and the detected scene change frames are added to the pre-set region of the video signal, so as to enable the efficient video searching.

The present invention provides a mobile communication terminal comprising: a video recorder associated with the mobile communication terminal to capture video recordings; a memory to store the video recordings; a display device to display the video recordings stored in the memory; and a processor cooperating with the video recorder, the memory, and the display device to perform the steps of, processing the stored video recordings according to their frames by comparing at least a certain number of pixels of a current frame with those of a reference frame to determine whether the current frame should be used as a scene change frame that can be viewed later by a user when searching for a desired scene, inserting scene change frame information related to one or more scene change frames into appropriate portions of the video recordings stored in the memory, and displaying the scene change frames upon user request to facilitate searching of scenes in the video recordings.

The reference frame can be every nth frame of the video recording. The comparing can be performed by calculating differences between motion values of pixels in the current frame with those in the reference frame. The current frame can be a scene change frame if the current frame contains more changes in image motions when compared to those of the reference frame. The changes in image motions can be determined by comparing brightness values of pixels in the current frame when compared to those in the reference frame. The scene change frame information can be in a format that allows previewing by the user. The scene change frame information can include time data indicating a unique point in time of each scene change frame within a duration of the video recording.

The present invention also provides a mobile communication terminal comprising: a transceiver to receive signals including video recordings; a memory to store the received video recordings; a display device to display the video recordings stored in the memory; and a processor cooperating with the transceiver, the memory, and the display device to perform the steps of, determining a total number of scene change frames in the video recordings based upon scene change frame information related to one or more scene change frames that was inserted into appropriate portions of the video recordings, adding supplementary scene change frames or removing excess scene change frames until the determined total number of scene change frames match a reference value, and displaying the scene change frames upon user request to facilitate searching of scenes in the video recordings.

The adding or removing step can be performed based upon a time interval between adjacent scene change frames.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalence of such metes and bounds are therefore intended to be embraced by the appended claims.

**Claims**

1. An apparatus for searching video of a mobile communications terminal comprising:

   a scene change frame detector to detect a preset number of scene change frames based on inputted video streaming data and then to output the detected scene change frames; and
   a display unit to display the outputted scene change frames according to a user's request for video searching.

2. The apparatus of claim 1, further comprising a video decoder to decode an inputted video signal and to output the decoded video signal as video streaming data.

3. The apparatus of claim 1, wherein the scene change frame detector comprises:

a candidate motion frame detector to detect a candidate motion frame based on the inputted video streaming signal;

a scene change preliminary candidate frame detector to detect a scene change preliminary candidate frame based on the detected candidate motion frame;

a scene change timer to record a generation time value of the scene change preliminary candidate frame in the detected scene change preliminary candidate frame;

a scene change candidate frame determiner to determine a scene change candidate frame based on the recorded generation time value; and

a scene change frame determiner to allow the number of the determined scene change candidate frames to be identical to a preset reference value, and determine the scene change candidate frame being identical as a scene change frame.

4. The apparatus of claim 3, wherein the candidate motion frame detector determines a current frame as the candidate motion frame when a difference value between a motion value of pixels in a reference frame and a motion value of pixels in the current frame is greater than a preset reference value.

5. The apparatus of claim 4, wherein the reference frame is a frame selected according to a preset frame unit.

6. The apparatus of claim 4, wherein the motion value of the pixels in the reference value is obtained by adding all the motion values of the selected pixels according to a preset pixel unit.

7. The apparatus of claim 6, wherein the motion value of the pixels in the current frame is a motion value of pixels corresponding to the motion value of the pixels in the reference frame.

8. The apparatus of claim 3, wherein the scene change preliminary candidate frame detector determines the candidate motion frame as the scene change preliminary candidate frame when a difference value between a brightness value of pixels in the reference frame and a brightness value of pixels in the detected candidate motion frame is greater than a preset reference value.

9. The apparatus of claim 8, wherein the scene change timer adds a time flag field to the detected scene change preliminary candidate frame.

10. The apparatus of claim 9, wherein the time flag field includes a generation time of the scene change preliminary candidate frame.

11. The apparatus of claim 3, wherein the scene change candidate frame detector determines the scene change preliminary candidate frame as the scene change candidate frame when a difference value between a generation time of the scene change preliminary candidate frame and a previously-determined scene change candidate frame is greater than a preset reference value.

12. The apparatus of claim 3, wherein the scene change frame determiner sets, as the scene change candidate frame, one of frames positioned between scene change candidate frames having the greatest difference value between each generation time of the determined scene change candidate frames when the number of the determined scene change candidate frames is smaller than the preset reference value.

13. The apparatus of claim 12, wherein the frames positioned between the scene change candidate frames are scene change preliminary candidate frames.

14. The apparatus of claim 3, wherein the scene change frame determiner removes a scene change candidate frame having the smallest difference value between each generation time of the determined scene change candidate frames when the number of the determined scene change candidate frames is greater than the preset reference value.

15. A method for searching video of a mobile communications terminal comprising:

detecting a preset number of scene change frames based on inputted video streaming data and outputting the detected scene change frames; and

displaying the outputted scene change frames according to a user's request for video searching.

**16.** The method of claim 15, further comprising decoding an inputted video signal and outputting the decoded video signal as video streaming data.

**17.** The method of claim 15, wherein the step of outputting the scene change frame comprises:

detecting a candidate motion frame based on the inputted video streaming data;

detecting a scene change preliminary candidate frame based on the detected candidate motion frame;

recording a generation time of the scene change preliminary candidate frame in the detected scene change preliminary candidate frame;

detecting a scene change candidate frame based on the recorded generation time information;

confirming whether the scene change candidate frame with respect to all the inputted video streaming data is completely detected; and

determining a scene change frame based on the detected scene change candidate frame when the scene change candidate frame is completely detected.

**18.** The method of claim 17, wherein the step of detecting the candidate motion frame comprises:

calculating a difference value between motion values of pixels in a reference frame and motion values of pixels in a current frame;

comparing the calculated difference value with a preset reference value; and

when the calculated difference value is greater than the preset reference value, determining the current frame as the candidate motion frame.

**19.** The method of claim 18, wherein the reference frame is a frame selected according to a preset frame unit.

**20.** The method of claim 15, wherein the motion value of the pixels in the reference frame is obtained by adding motion values of pixels selected according to the preset pixel unit.

**21.** The method of claim 20, wherein the motion value of the pixels in the current frame is a motion value of pixels corresponding to the motion value of the pixels in the reference frame.

**22.** The method of claim 17, wherein the step of detecting the scene change preliminary candidate frame comprises:

calculating a difference value between brightness values of pixels in the reference frame and those of pixels in the determined candidate motion frame;

comparing the calculated difference value with a preset reference value; and

when the calculated difference value is greater than the preset reference value, determining the candidate motion frame as the scene change preliminary candidate frame.

**23.** The method of claim 17, further comprising adding a time flag field to the detected scene change preliminary candidate frame.

**24.** The method of claim 23, wherein the time flag field includes a generation time of the scene change preliminary candidate frame.

**25.** The method of claim 17, wherein the step of detecting the scene change candidate frame comprises:

calculating a difference value between a generation time of the detected scene change preliminary candidate frame and a generation time of a previously-determined scene change candidate frame;

comparing the calculated difference value with a preset reference value;

when the calculated difference value is greater than the preset reference value, determining the scene change preliminary candidate frame as a scene change candidate frame; and

accumulating the number of the determined scene change candidate frames.

**EP 1 670 244 A2**

**26.** The method of claim 17, wherein the step of determining the scene change frame comprises:

detecting the number of the determined scene change candidate frames being accumulated;
comparing the detected number of the scene change candidate frames being accumulated with a preset reference value;
when the number of the scene change candidate frames being accumulated is identical to the preset reference value, determining the scene change candidate frame as a scene change frame.

**27.** The method of claim 26, further comprising:

when the number of the scene change candidate frames being accumulated is not identical to the preset reference value, adjusting the number of scene change candidate frame as many as the difference value; and updating the number of the scene change candidate frames being accumulated based on the adjusted scene change candidate frame.

**28.** The method of claim 27, wherein the step of adjusting the scene change frame comprises:

when the number of the determined scene change candidate frames is smaller than the preset reference value, setting, as the scene change candidate frame, one of frames positioned between scene change candidate frames having the greatest difference value between each generation time of the determined scene change candidate frames.

**29.** The method of claim 28, wherein the frames positioned between the scene change candidate frames are the scene change preliminary candidate frames.

**30.** The method of claim 27, wherein the step of determining the scene change frame comprises:

when the number of the determined scene change candidate frames is greater than the preset reference value, removing a scene change candidate frame having the smallest difference value between each generation time of the determined scene change candidate frames.

**31.** A mobile communication terminal comprising:

a video recorder associated with the mobile communication terminal to capture video recordings;
a memory to store the video recordings;
a display device to display the video recordings stored in the memory; and
a processor cooperating with the video recorder, the memory, and the display device to perform the steps of, processing the stored video recordings according to their frames by comparing at least a certain number of pixels of a current frame with those of a reference frame to determine whether the current frame should be used as a scene change frame that can be viewed later by a user when searching for a desired scene,
inserting scene change frame information related to one or more scene change frames into appropriate portions of the video recordings stored in the memory, and
displaying the scene change frames upon user request to facilitate searching of scenes in the video recordings.

**32.** The terminal of claim 31, wherein the reference frame is every nth frame of the video recording.

**33.** The terminal of claim 31, wherein the comparing is performed by calculating differences between motion values of pixels in the current frame with those in the reference frame.

**34.** The terminal of claim 31, wherein the current frame is a scene change frame if the current frame contains more changes in image motions when compared to those of the reference frame.

**35.** The terminal of claim 34, wherein the changes in image motions is determined by comparing brightness values of pixels in the current frame when compared to those in the reference frame.

**36.** The terminal of claim 31, wherein the scene change frame information is in a format that allows previewing by the user.

**37.** The terminal of claim 31, wherein the scene change frame information includes time data indicating a unique point in time of each scene change frame within a duration of the video recording.

**38.** A mobile communication terminal comprising:

a transceiver to receive signals including video recordings;
a memory to store the received video recordings;
a display device to display the video recordings stored in the memory; and
a processor cooperating with the transceiver, the memory, and the display device to perform the steps of,
determining a total number of scene change frames in the video recordings based upon scene change frame information related to one or more scene change frames that was inserted into appropriate portions of the video recordings,
adding supplementary scene change frames or removing excess scene change frames until the determined total number of scene change frames match a reference value, and
displaying the scene change frames upon user request to facilitate searching of scenes in the video recordings.

**39.** The terminal of claim 31, wherein the adding or removing step is performed based upon a time interval between adjacent scene change frames.

# FIG. 1

STAR T

S100

IS SEARCHING FOR VIDEO SIGNAL REQUESTED ?

NO

YES

REPRODUCING SEARCHING-REQUESTED VIDEO SIGNAL AT HIGH SPEED

S110

S120

HAS SEARCHED FOR DESIRED SCENE ?

NO

YES

NORMALLY REPRODUCING VIDEO SIGNAL FROM DETECTED SCENE

S130

END

# FIG. 2

VIDEO DECODER
100

SCENE CHANGE FRAME DETECTOR
200

DISPLAY UNIT
300

# FIG. 3

**200**

**210**

CANDIDATE
MOTION
FRAME
DETECTOR

**220**

SCENE
CHANGE
PRELIMINARY
CANDIDATE
FRAME
DETECTOR

**230**

SCENE
CHANGE
TIMER

**240**

SCENE
CHANGE
CANDIDATE
FRAME
DETECTOR

**250**

SCENE
CHANGE
FRAME
DETECTOR

**260**

PRE-
VIEWER

**270**

VIDEO
GENERA
TOR

# FIG. 4

```
                    ┌─────────────┐
                    │    START    │
                    └──────┬──────┘
                           │
                           ▼                          S400
      ┌────────────────────────────────────────┐
      │ DETECTING CANDIDATE MOTION              │
      │ FRAME BASED ON INPUTTED VIDEO           │
      │ STREAMING DATA                          │
      └────────────────────┬───────────────────┘
                           │                          S410
      ┌────────────────────▼───────────────────┐
      │ DETECTING SCENE CHANGE PRELIMINARY      │
      │ CANDIDATE FRAME BASED ON DETECTED       │
      │ CANDIDATE MOTION FRAME                  │
      └────────────────────┬───────────────────┘
                           │                          S420
      ┌────────────────────▼───────────────────┐
      │ RECORDING GENERATION TIME VALUE OF      │
      │ DETECTED SCENE CHANGE PRELIMINARY       │
      │ CANDIDATE FRAME                         │
      └────────────────────┬───────────────────┘
                           │                          S430
      ┌────────────────────▼───────────────────┐
      │ DETECTING SCENE CHANGE                  │
      │ CANDIDATE FRAME BASED ON                │
      │ RECORDED GENERATION TIME VALUE          │
      └────────────────────┬───────────────────┘
                           │            S440
                           ▼
                 ◇ COMPLETELY ◇              NO
                 ◇ DETECTED SCENE ◇ ──────────────►
                 ◇ CHANGE CANDIDATE ◇
                 ◇ FRAME ? ◇
                      │ YES
                      ▼                               S450
      ┌────────────────────────────────────────┐
      │ DETERMINING SCENE CHANGE                │
      │ FRAME BASED ON DETECTED SCENE           │
      │ CHANGE CANDIDATE FRAME                  │
      └────────────────────┬───────────────────┘
                           │                          S460
      ┌────────────────────▼───────────────────┐
      │ DISPLAYING DETERMINED SCENE             │
      │ CHANGE FRAME                            │
      └────────────────────┬───────────────────┘
                           │
                    ┌──────▼──────┐
                    │     END     │
                    └─────────────┘
```

# FIG. 5

**S400**

STAR T

CALCULATING DIFFERENCE VALUE
BETWEEN MOTION VALUE OF PIXELS IN
REFERENCE FRAME AND MOTION VALUE
OF PIXELS IN CURRENT FRAME **S402**

CALCULATED DIFFERENCE
VALUE > PRESET
REFERENCE VALUE ? **S404**

NO

YES

DETECTING CURRENT FRAME AS
CANDIDATE MOTION FRAME **S406**

END

EP 1 670 244 A2

# FIG. 6

**S410**

START

**S412**

CALCULATING DIFFERENCE VALUE
BETWEEN BRIGHTNESS VALUE OF
PIXELS IN REFERENCE FRAME AND
BRIGHTNESS VALUE OF PIXELS IN
CANDIDATE MOTION FRAME

**S414**

CALCULATED DIFFERENCE
VALUE > PRESET
REFERENCE VALUE ?

NO

YES

**S416**

DETECTING CANDIDATE MOTION
FRAME AS SCENE CHANGE
PRELIMINARY CANDIDATE FRAME

END

17

# FIG. 7

**S430**

( START )

**S432**

CALCULATING DIFFERENCE VALUE
BETWEEN GENERATION TIME OF
SCENE CHANGE PRELIMINARY
CANDIDATE FRAME AND GENERATION
TIME OF PREVIOUSLY-DETERMINED
SCENE CHANGE CANDIDATE FRAME

**S434**

CALCULATED DIFFERENCE
VALUE > PRESET
REFERENCE VALUE ?

NO

YES

**S436**

DETECTING SCENE CHANGE
PRELIMINARY CANDIDATE
FRAME AS SCENE CHANGE
CANDIDATE FRAME

**S438**

ACCUMULATING THE NUMBER OF
DETECTED SCENE CHANGE
CANDIDATE FRAMES

( END )

# FIG. 8

S450

```
        ┌─────────┐
        │  START  │
        └────┬────┘
             │
             ▼
  ┌──────────────────────┐   S452
  │ DETECTING THE        │
  │ NUMBER OF SCENE      │
  │ CHANGE CANDIDATE     │
  │ FRAMES BEING         │
  │ ACCUMULATED          │
  └──────────┬───────────┘
             │
             ▼
```

S454                                    S458

```
         ╱╲
        ╱  ╲  THE DETECTED
       ╱    ╲ NUMBER OF BEING        NO
      ╱ ACCUMULATED = ╲──────────────────►
       ╲ PRESET REFERENCE ╱
        ╲  VALUE ?  ╱
         ╲╱
          │ YES
          │
```

S4582
```
                ╱╲
               ╱  ╲ THE DETECTED
              ╱    ╲ NUMBER OF BEING        N
             ╱ ACCUMULATED < ╲──────O───────►
              ╲ PRESET       ╱
               ╲ REFERENCE  ╱
                ╲ VALUE ? ╱
                 ╲╱
                  │ YES
```

S4584                              S4586

```
  ┌──────────────────┐    ┌──────────────────┐
  │ ADDING SCENE     │    │ REMOVING SCENE   │
  │ CHANGE           │    │ CHANGE           │
  │ CANDIDATE        │    │ CANDIDATE FRAME  │
  │ FRAME            │    └──────────────────┘
  └──────────────────┘
```

S4588

```
  ┌──────────────────┐
  │ UPDATING THE     │
  │ NUMBER OF        │
  │ SCENE CHANGE     │
  │ CANDIDATE        │
  │ FRAMES BEING     │
  │ ACCUMULATED      │
  └──────────────────┘
```

S456

```
  ┌──────────────────────┐
  │ DETERMINING SCENE    │
  │ CHANGE CANDIDATE     │
  │ FRAME AS SCENE       │
  │ CHANGE FRAME         │
  └──────────┬───────────┘
             │
             ▼
        ┌─────────┐
        │   END   │
        └─────────┘
```

# FIG. 9A

5       7       4       6       9

REMOVI
NG

# FIG. 9B

5       7       10       9

ADDI
NG